# EUROPEAN PATENT SPECIFICATION

(11) **EP 0 716 339 B1**
(45) Date of publication and mention of the grant of the patent: **12.09.2001**
(21) Application number: 95203169.8
(22) Date of filing: 20.11.1995
(51) Int. Cl.: G03C 1/74, G03C 1/76, C03C 17/00

(54) **A silver halide photographic material and a dry imaging material comprising a glass support**
Photographisches Silberhalogenidmaterial und trockenentwickelbares Aufzeichnungsmaterial das einen Glasträger enthält
Matériau photographique à l'halogénure d' argent et matériau de formation d' images de devéloppement à sec comprenant un support en verre

(30) Priority: 05.12.1994 EP 94203517
(43) Date of publication of application: 12.06.1996
(73) Proprietor: AGFA-GEVAERT N.V., 2640 Mortsel (BE)
(72) Inventor: Verlinden, Bartholomeus, B-2640 Mortsel (BE); Tahon, Jean-Pierre, B-2640 Mortsel (BE); Leenders, Luc, B-2640 Mortsel (BE)

(56) References cited:
- WO-A-87/06626
- FR-A- 905 934
- GB-A- 552 089
- GB-A- 1 093 777
- US-A- 5 143 759

## Description

### 1. Field of the invention.

This invention relates to silver halide photographic materials and dry imaging materials comprising a glass support, wherein the glass is coated in a continuous way.

### 2. Background of the Invention.

For many applications of silver halide photographic materials, dimensional stability is of utmost importance. Although polyester based plastic films can be used to produce photographic materials showing good dimensional stability, it is for speciality applications, e.g. photomicrography, some graphic arts application, photofabrication of PCB (printed circuit boards), still preferred to use silver halide photographic materials coated on glass. Also in application where the material has to have high thermal stability, the use of a glass support is preferred over the use of a plastic film support. An example of an application where high thermal stability is needed is the manufacture of LCD 's as described in EP-B 396 824 and EP-A 615 161. In the manufacture of colour filters for the production of colour LCD's the optical isotropy of glass (most polymer films are optically anisotropic, i.e. show birefringence) is an advantage.

Applying layers on glass plates is a discontinuous process and hence poses special problems for coating layer from a liquid coating solution as well as for e.g. sputtering or vacuum deposition of layers.

Coating silver halide emulsions on glass plates is not a straightforward operation. The difficulties are enumerated in various documents, US-P 4,033,290, US-P 5,254,447 being of the most explicit.

The main problem in coating glass plates is the fact that it is a discontinuous process. In such a process the glass plates advance one after another underneath a coating device. When the coating device dispenses continuously coating liquids, the leading and trailing end of each glass plate is coated, but there is a great risk of coating liquids reaching the side of the glass plate were no coating liquid should adhere to the plate. This phenomenon is known as "backside smearing". In Research Disclosure n° 19918, of November 1980 it has been disclosed to provide a resilient hydrophobic bead between the adjacent rear and front faces (edges) of the glass plates, to avoid "back smearing". In US-P 5,143,759 a system to overcome the cited problems is disclosed. It comprises using a liquid feeder having an elastic flexible hanger fitted to its bottom, and control means for keeping a glass plate and the hanger out of contact until the leading edge of the plate passes under the hanger, for putting plate and hanger in contact with each other after the leading edge of the plate has passed under the hanger so that coating is started, and putting plate and hanger out of contact immediately before the liquid is applied to the plate at the trailing edge thereof. This method leaves the leading and trailing margin of a glass plate uncoated and avoid "backside smearing", but requires delicate control of contact and no-contact of the hanger with the glass plates. Further, it easily causes bands and streaks, in particular if the rearside of the hanger becomes soiled. To avoid "backside-smearing" the glass plates are, during the coating process, only supported on the edges. This limits the width of the plates and the thickness of the plates that can be coated in a discontinuous process because wide and thin glass plates that are only supported by the edges bend in the middle and can not easily be coated uniformly.

It has also been proposed to laminate silver halide photographic materials, coated on conventional plastic film, on to the glass plates and adhere the material on the glass plate by an adhesive layer. This adhesive layer may be present on the backside of the plastic film support and in that case the film support is still present in the final product. Lamination can also proceed via an adhesive layer provided on the silver halide emulsion and after lamination the plastic film support can be stripped away. Such a process is described in e.g. US-P 5,254,447.

Lamination of silver halide photographic materials via an adhesive layer onto glass plates bring about problems in avoiding the formation of minute air bubbles between the glass support and the laminate. These air bubbles even when only around 1 µm in diameter do negatively influence the usefulness of the material, since silver halide materials comprising a glass support are mainly used in areas where the highest quality with respect to any defects is demanded.

In WO 87/06626 it has been disclosed that sputtering of metals, semi-conducting metal alloys, metal oxide and mixtures thereof could proceed on thin rolled up glass. It is said however that glass even with a thickness as low as (1 mil) 0.0254 mm will fracture almost immediately. The disclosure of WO 87/06626 is concerned with measures to avoid problems with rolling thin glass.

There is thus still need to have a process to coat layers, especially silver halide emulsion layers, on glass in a continuous process, to have an economical sound way to produce flawless coatings on glass.

### 3. Objects and Summary of the Invention.

It is an object of the invention to provide a silver halide photographic material comprising a glass support and produced in a continuous process.

It is a further object of the invention to provide dry imaging materials comprising a glass support and produced in a continuous process.

Further objects and advantages of the invention will become clear from the detailed description hereinafter.

The object of the invention is realized by providing a silver halide photographic material comprising a glass support characterised in that :
(i) the thickness of said glass support is lower than 1.2 mm,
(ii) said glass support has an elasticity modulus (Young's modulus) equal to or lower than 10 x 10¹⁰ Pa and
(iii) said glass support has a failure stress (under tensile stress) equal to or higher than 1 x 10⁷ Pa.

The further object of the invention is realised by providing a dry imaging material comprising a glass support and a dry imaging layer applied to said support, characterised in that :
(i) said dry imaging layer is a vacuum deposited bismuth (Bi) layer.
(ii) the thickness of said glass support is lower than 1.2 mm,
(iii) said glass support has an elasticity modulus (Young's modulus) equal to or lower than 10 x 10¹⁰ Pa and
(iv) said glass support has a failure stress (under tensile stress) equal to or higher than 1 x 10⁷ Pa.

### 4. Brief Description of the Drawing

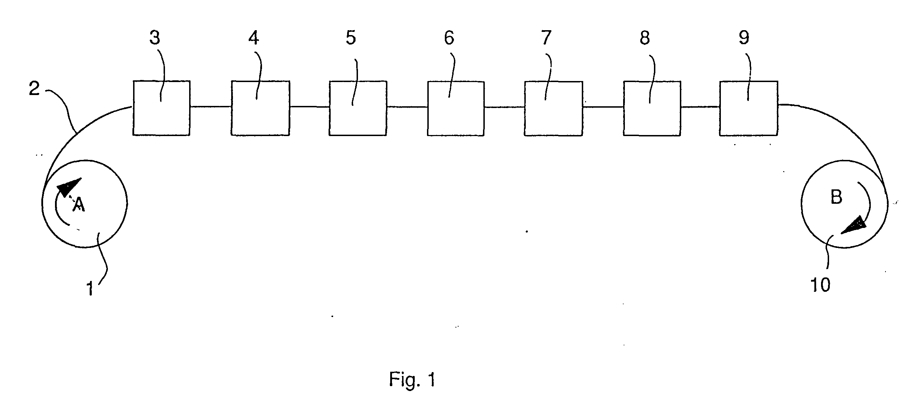

Fig. 1 is a schematic diagram of a coating machine useful for continuously coating a layer on glass, wherein the glass support passes through said coating machine as a web, unwound from a roll.

### 5. Detailed description of the Invention.

The main advantages of glass as a support for any layer is the dimensional stability of the glass support and the recyclability, the main drawback is the weight of the glass support. Therefore, in many applications, the trend exists to use thinner glass supports to keep the dimensional stability, but to lower the weight of the finished product. The need for glass supports with thickness under 1.2 mm is not uncommon. E.g. in the manufacture of LCD the use of glass supports as thin as 0.7 mm is advisable. Especially in this segment, the use of even thinner glass supports is highly desired, both for economical reasons and reasons of weight.

Not only in the production of colour filters for use in the manufacture of LCD's thin glass is desirable, but in all applications where the higher dimensional stability, transparency, of glass, compared to plastic film are desired, a thin glass support is desirable. In photography an application can be in e.g. graphic arts material. Not only silver halide materials, where the light sensitive layer(s) are essentially coated from a liquid coating solution, but also in heat mode imaging materials, where e.g. vacuum deposited metal layers (especially bismuth layers) are used as image recording medium can benefit from having a thin glass support. In fact all imaging materials, where high dimensional stability is necessary, will benefit from being applied to a thin glass support.

The application of any layer to a thin glass support can proceed by sputtering, as disclosed e.g. in WO 87/06626, by lamination of a layer (optionally via an adhesive layer) via a material comprising a layer on a temporary support as well as by coating from a liquid coating solution.

The problems of coating one or more layers on glass supports as thin as or thinner than 0.7 mm in a discontinuous coating process are even more severe than problems associated with the discontinuous coating on thicker glass supports, because wide and thin glass plates that are only supported by the edges (as is done in a discontinuous process for coating glass plates) bend in the middle and can not easily be coated uniformly.

It has been found than, when it is needed to coat a layer on a glass support, which is thinner than 1.2 mm, it is possible to supply the glass support on roll. This brings the great advantage that such a support can be coated in any continuous coating equipment for coating layers on plastic films. It was found that when glass is not thicker than 1.2 mm it can be presented in roll form and thus be unwound and coated as a web in a continuous coating machine. This is particularly so when said glass support has an elasticity modulus (Young's modulus) equal or lower than 10 x 10¹⁰ Pa, preferably lower than 7 x 10¹⁰ Pa. When said glass has moreover a failure stress (under tensile stress) equal to or higher than 1 x 10⁷ Pa, preferably higher than 4 x 10⁷ Pa, it is even easier to present it in roll form. When the glass fulfils these requirements, it can, depending on the thickness, be presented on rolls wound upon a core, said core having a diameter between 0.1 m and 3 m.

It was also found that, when the glass support is thinner than 1.2 mm, has an elasticity modulus (Young's modulus) lower than 10 x 10¹⁰ Pa, preferably lower than 7 x 10¹⁰ Pa, and a failure stress (under tensile stress) higher than 4 x 10⁷ Pa, it can, depending on the thickness, be presented on rolls wound upon a core having a diameter between 0.1 m and 1.6 m. When the glass support has an elasticity modulus (Young's modulus) lower than 10 x 10¹⁰ Pa, preferably lower than 7 x 10¹⁰ Pa, and a failure stress (under tensile stress) higher than 4 x 10⁷ Pa, and is not more than 0.8 mm tick, it can be presented on rolls wound upon a core having a diameter between 0.1 m and 1.2 m.

Fig. 1 shows a schematic diagram of a continuous coating machine useful for coating glass webs, according to the present invention, unwound from a roll and with a liquid coating composition. The glass on roll (1) is unwound in the direction of arrow A to deliver a glass web (2) entering the coating machine via the web handling unit (3), where the web is positioned and put under the desired tension. The web is cleaned in the web cleaning station (4) and preconditioned (relative humidity, temperature, are set) in preconditioning station (5). The coating solution is applied in coating station (6). After coating the layer is solidified (station 7) and cured (station 8). In station 9, the material is conditioned and is afterwards wound again upon a roll (10) in the direction of arrow B.

Glass on roll for coating a layer on it in a continuous way will have a coating width of at least 5 cm. I.e. while the glass is at most 1.2 mm thick, the ratio width/thickness of glass rolls according to the present invention is at least 40.

Before coating the surface on one or both sides of the rolled glass can be pretreated, e.g can be etched.

Glass on roll can be coated with any of the coating solutions that are now applied to flat sheets of glass, e.g. filter layers, adhesive layers. Glass on roll can be coated by any of the continuous coating techniques that are used to coat solutions on running webs, e.g. dip coating, rod coating, blade coating, air knife coating, gravure coating, reverse roll coating, extrusion coating, slide coating and curtain coating. An overview of these coating techniques can be found in the book "Modern Coating and Drying Technology", Edward Cohen and Edgar B. Gutoff Editors, VCH publishers, Inc, New York, NY, 1992. It is possible to coat simultaneously multiple layers on glass on roll by coatings technique known as useful for the simultaneous coating of multiple layers as e.g. slide coating, curtain coating.

Glass on roll is especially useful for the production of silver halide photographic materials on glass support, where at least one aqueous hydrophillic colloid solution comprising silver halide crystals is coated on said glass support. The use of thin glass (thickness below 1.2 mm, preferably below 0.8 mm) as support for silver halide photographic materials is desirable since glass is a cheap, ecological and perfectly recyclable support. Glass in roll form can, when its thickness is between 50 and 300 µm (0.05 and 0.3 mm), favourably replace plastic films as support for photographic materials. Such a glass support can be used in clear or coloured (grey, blue) form.

The silver halide photographic material coated on the rolled glass can be of any type known in the art, e.g. black and white materials, colour materials, materials designed for use in graphic arts, printing plates, materials for use in medical diagnosis, motion picture materials, diffusion transfer materials (both the emulsion layers and the acceptor layer comprising nucleation nuclei), in a dye diffusion transfer process operating with silver halide emulsion layers. The principles and embodiments of silver image formation by DTR-photography are described e.g. by André Rott and Edith Weyde in the book "Photographic Silver Halide Diffusion Processes" - The Focal Press London and New York (1972), and the principles and embodiments of the production of colour images by dye diffusion transfer are described e.g. by C. Van de Sande in Angew. Chem. Int. Ed. Engl. 22, (1983) p. 191-209.

For the composition of silver halide emulsion layers and auxiliary layers reference is made e.g. to Research Disclosure 17,643 of December 1978 and Research Disclosure 307,105 of November 1989.

Silver halide photographic materials coated on rolled glass according to the present invention, can comprise any know hydrophillic binder or a mixture of hydrophillic and hydrophobic binders. Useful binders are e.g. gelatin, polyvinylalcohol, polyvinylpyrollidone, dextrans, synthetic clays, polyamides, or mixtures of these binders. The emulsions can comprises any known polymeric latex.

The silver halide photographic material coated on the rolled glass can comprise a single layer of a silver halide emulsion, or multiple layers of the same or different silver halide emulsions

The silver halide emulsions used in the photographic materials coated on rolled glass can comprise any type of photosensitive silver halide, e.g. silver bromide, silver chloride, silver chloroiodide, silver bromoiodide or silver chlorobromoiodide or mixtures thereof. The average particle size is preferably in the range of 0.01 to 1.2 µm. The size distribution of the silver halide particles can be homodisperse or heterodisperse.

The crystal habit of the silver halide particles used in silver halide photographic materials coated on rolled glass, according to the present invention, can be of any type known in the art. The silver halide particles can have a pure cubic or octahedral habit without twin planes. They can also have a mixed cubic/octahedral habit without twin planes. The silver halide crystal particles used in emulsion coated on rolled glass can also contain one or more twin planes, can be tabular as disclosed e.g. in DE 32 41 634 and DE 32 41 640.

The light-sensitive silver halide emulsions can be chemically sensitized as described e.g. by P. Glafkidès in "Chimie et Physique Photographique", Paul Montel, Paris (1987), by G.F. Duffin in "Photographic Emulsion Chemistry", The Focal Press, London (1966), and by V.L. Zelikman et al in "Making and Coating Photographic Emulsion", The Focal Press, London (1966), and in "Die Grundlagen der Photographischen Prozesse mit Silberhalogeniden" edited by H. Frieser and published by Akademische Verlagsgesellschaft (1968).

The light-sensitive silver halide emulsions, coated on glass rolls according to the present invention, can be spectrally sensitized with methine dyes such as those described by F.M. Hamer in "The Cyanine Dyes and Related Compounds", 1964, John Wiley & Sons. Dyes that can be used for the purpose of spectral sensitization include cyanine dyes, merocyanine dyes, complex cyanine dyes, complex merocyanine dyes, hemicyanine dyes, styryl dyes and hemioxonol dyes. Particularly valuable dyes are those belonging to the cyanine dyes, merocyanine dyes and complex merocyanine dyes. However in the particular case of a contact daylight material the emulsion is preferably not spectrally sensitized in view of the daylight stability.

The silver halide emulsion(s), coated on glass rolls according to the present invention, may be direct positive emulsions, either of the internally desensitized type or of the externally desensitized type comprising spectral desensitizers, e.g. pinakryptol yellow.

The silver halide emulsion(s), coated on glass rolls according to the present invention, may comprise compounds preventing the formation of fog or stabilizing the photographic characteristics during the production or storage of photographic elements or during the photographic treatment thereof. Many known compounds can be added as fog-inhibiting agent or stabilizer to the silver halide emulsion.

The photographic material, coated on glass rolls according to the present invention, may further comprise various kinds of surface-active agents in the photographic emulsion layer or in another hydrophillic colloid layer. Suitable surface-active agents include non-ionic agents such as saponins, alkylene oxides e.g. polyethylene glycol, polyethylene glycol/polypropylene glycol condensation products, polyethylene glycol alkyl ethers or polyethylene glycol alkylaryl ethers, polyethylene glycol esters, polyethylene glycol sorbitan esters, polyalkylene glycol alkylamines or alkylamides, silicone-polyethylene oxide adducts, glycidol derivatives, fatty acid esters of polyhydric alcohols and alkyl esters of saccharides; anionic agents comprising an acid group such as a carboxy-, sulpho-, phospho-, sulphuric- or phosphoric ester group; ampholytic agents such as aminoacids, aminoalkyl sulphonic acids, aminoalkyl sulphates or phosphates, alkyl betaines, and amine-N-oxides; and cationic agents such as alkylamine salts, aliphatic, aromatic, or heterocyclic quaternary ammonium salts, aliphatic or heterocyclic ring-containing phosphonium or sulphonium salts. Such surface-active agents can be used for various purposes e.g. as coating aids, as compounds preventing electric charges, as compounds improving slidability, as compounds facilitating dispersive emulsification, as compounds preventing or reducing adhesion, and as compounds improving the photographic characteristics e.g higher contrast, sensitization, and development acceleration. Preferred surface-active coating agents are compounds containing perfluorinated alkyl groups.

Colour photographic recording materials, coated on rolled glass according to the present invention, normally comprise at least one silver halide emulsion layer unit for recording light of each of the three spectral regions red, green and blue. For various possible embodiments of colour materials, coated on rolled glass according to the present invention, reference is made to Research Disclosure December 1989, n° 308119 paragraph VII.

Before coating the silver halide material on a glass roll, according to the present invention the glass support can be pre-coated with a subbing layer for a good adherence to the hydrophillic layers. Particularly suitable subbing layers for said purpose are on the basis of silicon compounds, e.g. these described in US-P 3,661,584 and GB-P 1,286,467. For improving the adherence said compounds can be added to the composition of the hydrophillic colloid layer adjacent to the glass support.

The silver halide material can also contain protective layers, filter layers, barrier layers, layers comprising mordanting agents, backing layers, anti-curl layers, antistatic layers, antihalation layers both as an undercoat and as an antihalation layer coated on the back of the material.

Glass presented on roll form is especially well suited for use in the production of multicolour liquid crystal device comprising multicolour filters as disclosed in, e.g., EP-B 396 824 and EP-A 615 161. In this case the glass is coated with at least three emulsion layers, each being sensitive to light of a specific wavelength range.

Glass on roll is not only well suited for the production of multicolour filters mentioned above, but also electronic components, needed in multicolour liquid crystal displays, can be applied more easily and with better quality when said components can be applied on glass presented on roll form. For the application of said electronic components on sheet glass, silk screen printing is used, but with glass on roll, faster and more reliable printing techniques can be used, e.g. offset printing.

After coating and drying the photographic material coated on glass rolls, according to the present invention, can be cut into sheet materials, can be kept in roll form.

When using silver halide photographic materials on rolled glass according to the present invention, it is necessary to keep the thin support flat, any known means to keep photographic materials coated on film support flat, can be used.

As explained above, it is not only beneficial to apply a silver halide material to a glass support, but it is also beneficial to apply a dry imaging material to a thin glass support. The glass support according to the present invention is also very well suited for being used in a dry imaging material. Examples of a dry imaging material, are e.g., a DRAW (Direct Read After Write) or dry-processable (i.e., the latent image formed by exposure to radiation is made visible without the use of any liquid) recording element having high dimensional stability.

In the dry imaging material according to the present invention, comprising a glass support and a dry imaging layer a thin vacuum deposited layer of Bi is used as the dry imaging layer because of its low toxicity and while it requires little energy for ablating by fusion or evaporation and forms films with ease by vapour deposition under vacuum conditions. Such a Bi (bismuth) layer is preferably protected against e.g. scratches, dust, by a protective layer. Several methods are suitable for applying such a protective layer, e.g. coating from a liquid solution, spraying of a protective layer on the Bi layer, laminating a protective layer on the Bi layer. A preferred method consists of laminating a protective organic resin layer in web form, by means of an adhesive layer and in the same vacuum environment as wherein the Bi layer is vacuum deposited, to said Bi layer, said Bi layer being deposited on a glass support according to the present invention. Such a method has been disclosed in detail in EP-B 384 041.

## Claims

1. A silver halide photographic material comprising a glass support **characterised in that** :
(i) the thickness of said glass support is lower than 1.2 mm,
(ii) said glass support has an elasticity modulus (Young's modulus) equal to or lower than 10 x 10¹⁰ Pa and
(iii) said glass support has a failure stress (under tensile stress) equal to or higher than 1 x 10⁷ Pa.

2. A silver halide photographic material according to claim 1, wherein said elasticity modulus (Young's modulus) is equal to or lower than 7 x 10¹⁰ Pa.

3. A silver halide photographic material according to claim 1 or 2, wherein said glass support has a thickness equal to or lower than 0.8 mm.

4. A silver halide photographic material according to any of claims 1 to 3, wherein said material is a colour material comprising at least three differently spectrally sensitized silver halide emulsion layers.

5. A dry imaging material comprising a glass support and a dry imaging layer applied to said support, **characterised in that** :
(i) said dry imaging layer is a vacuum deposited bismuth (Bi) layer.
(ii) the thickness of said glass support is lower than 1.2 mm,
(iii) said glass support has an elasticity modulus (Young's modulus) equal to or lower than 10 x 10¹⁰ Pa and
(iv) said glass support has a failure stress (under tensile stress) equal to or higher than 1 x 10⁷ Pa.

6. A dry imaging material according to claim 5, wherein said elasticity modulus (Young's modulus) is equal to or lower than 7 x 10¹⁰ Pa.

7. A dry imaging material according to claim 5 or 6, wherein said glass support has a thickness equal to or lower than 0.8 mm.

8. A dry imaging material according to claim 7, wherein a protective organic resin layer in web form is laminated, by means of an adhesive layer, to said vacuum deposited bismuth (Bi) layer.

## Patentansprüche

1. Ein fotografisches Silberhalogenidmaterial mit einem Glasträger, **dadurch gekennzeichnet, daß**
(i) die Stärke des Glasträgers weniger als 1,2 mm beträgt,
(ii) der Glasträger einen Elastizitätsmodul (Youngschen Modul) gleich oder kleiner 10 x 10¹⁰ Pa aufweist, und
(iii) der Glasträger eine Bruchspannung (unter Zugspannung) gleich oder höher 1 x 10⁷ Pa aufweist.

2. Fotografisches Silberhalogenidmaterial nach Anspruch 1, **dadurch gekennzeichnet, daß** der Elastizitätsmodul (Youngsche Modul) gleich oder kleiner 7 x 10¹⁰ Pa ist.

3. Fotografisches Silberhalogenidmaterial nach Anspruch 1 oder 2, **dadurch gekennzeichnet, daß** die Stärke des Glasträgers gleich oder kleiner 0,8 mm ist.

4. Fotografisches Silberhalogenidmaterial nach irgendeinem der Ansprüche 1 bis 3, **dadurch gekennzeichnet, daß** das Material ein Farbmaterial mit zumindest drei spektral unterschiedlich sensibilisierten Silberhalogenid-Emulsionsschichten ist.

5. Ein trockenentwickelbares Aufzeichnungsmaterial mit einem Glasträger und einer auf den Glasträger aufgetragenen trockenentwickelbaren Aufzeichnungsschicht, **dadurch gekennzeichnet, daß**
(i) die trockenentwickelbare Aufzeichnungsschicht eine im Vakuum aufgetragene Wismutschicht ist,
(ii) die Stärke des Glasträgers weniger als 1,2 mm beträgt,
(iii) der Glasträger einen Elastizitätsmodul (Youngschen Modul) gleich oder kleiner 10 x 10¹⁰ Pa aufweist, und
(iv) der Glasträger eine Bruchspannung (unter Zugspannung) gleich oder höher 1 x 10⁷ Pa aufweist.

6. Trockenentwickelbares Aufzeichnungsmaterial nach Anspruch 5, **dadurch gekennzeichnet, daß** der Elastizitätsmodul (Youngsche Modul) gleich oder kleiner 7 x 10¹⁰ Pa ist.

7. Trockenentwickelbares Aufzeichnungsmaterial nach Anspruch 5 oder 6, **dadurch gekennzeichnet, daß** die Stärke des Glasträgers gleich oder kleiner 0,8 mm ist.

8. Trockenentwickelbares Aufzeichnungsmaterial nach Anspruch 7, **dadurch gekennzeichnet, daß** eine Schutzschicht aus organischem Harz in Bahnform mit Hilfe einer Klebeschicht auf der im Vakuum aufgetragenen Wismutschicht laminiert ist.

## Revendications

1. Matériau photographique à l'halogénure d'argent comprenant un support en verre **caractérisé en ce que** :
(i) l'épaisseur dudit support en verre est inférieure à 1,2 mm
(ii) ledit support en verre possède un module d'élasticité (module de Young) égal à ou inférieur à 10 x 10¹⁰ Pa, et
(iii) ledit support en verre possède une tension de rupture (sous contrainte de traction) égale à ou supérieur à 1 x 10⁷ Pa.

2. Matériau photographique à l'halogénure d'argent selon la revendication 1, **caractérisé en ce que** ledit module d'élasticité (module de Young) est égal à ou inférieur à 7 x 10¹⁰ Pa.

3. Matériau photographique à l'halogénure d'argent selon la revendication 1 ou 2, caractérisé en ce ledit support en verre possède une épaisseur égale à ou inférieure à 0,8 mm.

4. Matériau photographique à l'halogénure d'argent selon l'une quelconque des revendications 1 à 3, **caractérisé en ce que** ledit matériau est un matériau couleurs comprenant au moins trois couches d'émulsion à l'halogénure d'argent à sensibilisation chromatique différente.

5. Matériau de formation d'images de développement à sec comprenant un support en verre et une couche de formation d'images de développement à sec appliquée sur ledit support, **caractérisé en ce que** :
(i) ladite couche de formation d'images de développement à sec est une couche de bismuth (Bi) déposée sous vide
(ii) l'épaisseur dudit support en verre est inférieure à 1,2 mm,
(iii) ledit support en verre possède un module d'élasticité (module de Young) égale à ou inférieure à 10 x 10¹⁰ Pa, et
(iv) ledit support en verre possède une tension de rupture (sous contrainte de traction) égale à ou supérieure à 1 x 10⁷ Pa.

6. Matériau de formation d'images de développement à sec selon la revendication 5, **caractérisé en ce que** ledit module d'élasticité (module de Young) est égal à ou inférieur à 7 x 10¹⁰ Pa.

7. Matériau de formation d'images de développement à sec selon la revendication 5 ou 6, **caractérisé en ce que** ledit support en verre possède une épaisseur égale à ou inférieure à 0,8 mm.

8. Matériau de formation d'images de développement à sec selon la revendication 7, **caractérisé en ce que** ladite couche de bismuth (Bi) déposée sous vide est contrecollée d'une couche protectrice de résine organique sous forme de feuille continue à l'aide d'une couche adhésive.
